# EUROPEAN PATENT APPLICATION

(11) **EP 2 886 973 A1**
(43) Date of publication of application: **24.06.2015**
(21) Application number: 13005887.8
(22) Date of filing: 18.12.2013
(51) Int. Cl.: F24J 2/52, H01L 31/042

(54) **Photovoltaic system and installation method thereof**

(71) Applicant: ReEnergy Projects 1 S.R.L., 70043 Monopoli (BA) (IT)
(72) Inventor: Hellebrand, Dietmar, 76307 Karlsbad - D - (DE)
(74) Representative: Russo, Dimitri

(57) **Abstract**

The object of the present invention is a photovoltaic system and its related installation method. The system is intended to be applied to the roof of a building or else to form the roof itself. The system provides means which allow it to compensate for the difference in level present in the roofs of in particular sheds. It can also be installed on roofs that feature industrial minimal sloping. Furthermore, the system can also be installed on both flat and barrel-shaped surfaces.

## Description

This invention is in the field of alternative energy production systems and more particularly relates to a system regarding the installation of photovoltaic modules on, or in place of, the roof of a building.

A photovoltaic module is a suitable device for converting light energy emitted by the sun into electricity by means of the photovoltaic effect, i.e., through the physical phenomenon that occurs when an electron within the valence band of a semiconductor moves to the conduction band as a result of the absorption of a photon with sufficient incident energy to impact the material.

As is known in the art, photovoltaic module performance may vary depending on several factors including: the performance of the materials, the manufacturing tolerance as a percentage of nominal rated values, solar irradiation, the angle of the modules with respect to the solar irradiation, the composition of the incident light spectrum and finally the operating temperature of the materials employed which tend to become "fatigued" in hot environments.

With the aim of obtaining the maximum performance from a photovoltaic system and at the same time avoiding the possibility of installations penalizing agricultural production through the occupation of fertile land destined for their installation, the best solution is now recognized as that involving the installation of new photovoltaic systems on the roofs of dwellings or better yet the roofs of industrial buildings.

The installation of such systems on the roofs of buildings and in particular those that are integrated into them presents a series of drawbacks among which, first and foremost is the impossibility of guaranteeing - except for those systems that employ plastic solar film - the of the roof covering to water at angles below 15 degrees. In fact with strong winds, water tends to flow back up the surface of each module until it reaches its extremity at which point, finding no obstacle, the water tends to filter down through the space existing between one module and the next.

A further disadvantage with known systems, and in particular with roofs integrated with polycrystalline modules, is of an aesthetic type, since these installations leave exposed the aluminum frames which are used to anchor the modules. Said drawback also applies to plastic solar film based installations.

Another drawback with known systems is in the fact that these systems are not designed to allow sufficient ventilation beneath the modules resulting in overheating said modules causing a relative reduction in panel performance.

Another drawback, specifically with systems employing a thermal insulation layer applied to roof coverings, is most definitely the limited durability of the system which being directly subjected to weathering and sunlight tends to deteriorate.

Because polycrystalline type modules require a precise angle of inclination and optimal roof exposure in order to obtain a lucrative degree of profitability, characteristics rarely found in building roofs, another drawback of known systems is the inability to follow roof contours.

A final further disadvantage of known systems is their intolerance to being walked over with the associated increased maintenance difficulties resulting in the accumulation of dirt and sediment that can give rise to a lower overall system yield.

The purpose of the present invention is to provide a structure suitable for allowing the installation of modules that integrate into the roofs of building with the possibility of replacing them altogether.

A further object of the present model is that of providing a structure which is suitable for the installation of glass-on-glass type modules both on flat and barrel-shaped surfaces.

A further objective is to provide for an impermeable roof, even in the case of roofs with angles of less than 6 degrees, thus having a system that in the case of strong winds will not allow water to flow up and subsequently filtering between one module and another.

Another objective is to provide a structure for the installation of systems which will ensure optimal performance even with less than 12 to 30 degree sloping roofs with south-oriented azimuths.

Finally, a further object is to provide a system that can be walked over if necessary in order to perform ordinary and or extraordinary maintenance operations.

The system for the installation of panels which are integrated into a building roof of the present invention, in addition to addressing the above described drawbacks, also presents a series of indisputable advantages, the first of which being the possibility to install it on existing roofs the surfaces of which are no longer suitable to serve as roofing.

A further advantage consists in the fact that the system hereinafter described can be installed on an asbestos cement or bitumen roof without necessarily restoring it in advance, since the same system would serve as a protective layer.

A further advantage is that once restored and subsequently protected by the system, the roof life span will be increased by several years.

Another advantage is to be found in the use of an adhesive to secure the modules to the system, which while ensuring the possibility of removing and replacing individual modules without damaging them makes it extremely difficult to steal them.

To all of these advantages it must be added that the use of an old roof involves the reduction of waste materials, the installation can take place regardless of weather conditions and it is more economical and has better mechanical strength compared to tar or plastic sheet roofs. In the case of asbestos cement roofs, thanks to the air chambers that form therein, better thermal and acoustic insulation is also obtained.

A final advantage consists in the possibility of integrating existing gutters into the system.

These advantages and other objectives, as will become apparent from the following description, are achieved with the system and its installation method of the present invention, which is described hereinafter in a preferred embodiment, which is not limited by further developments in the field of the invention, with the aid of the eight accompanying drawings which illustrate:
Fig. is an axonometric view of a purloin and three brackets for the compensation of height difference found in roofs that are not perfectly flat, according to an exemplary embodiment of the invention;

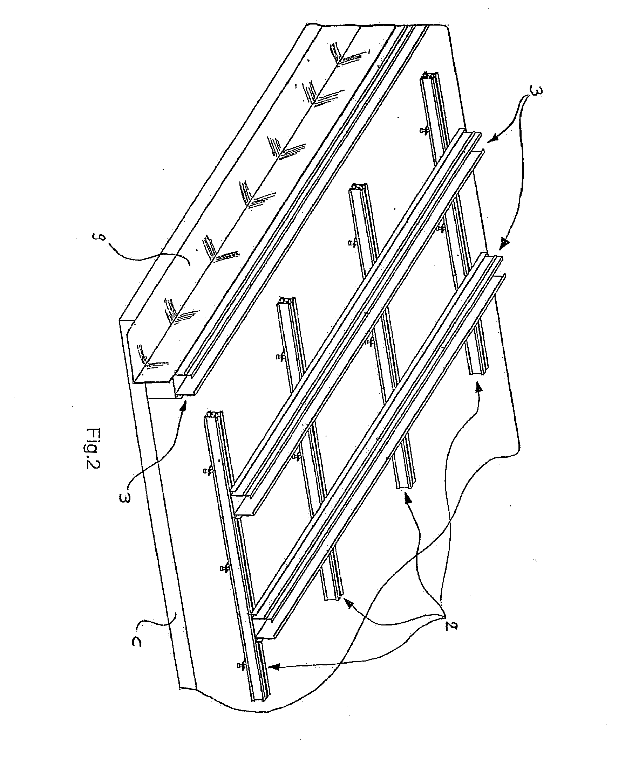

Fig. 2 is an axonometric view of a part of the grid formed by the purlins and upper profiles;

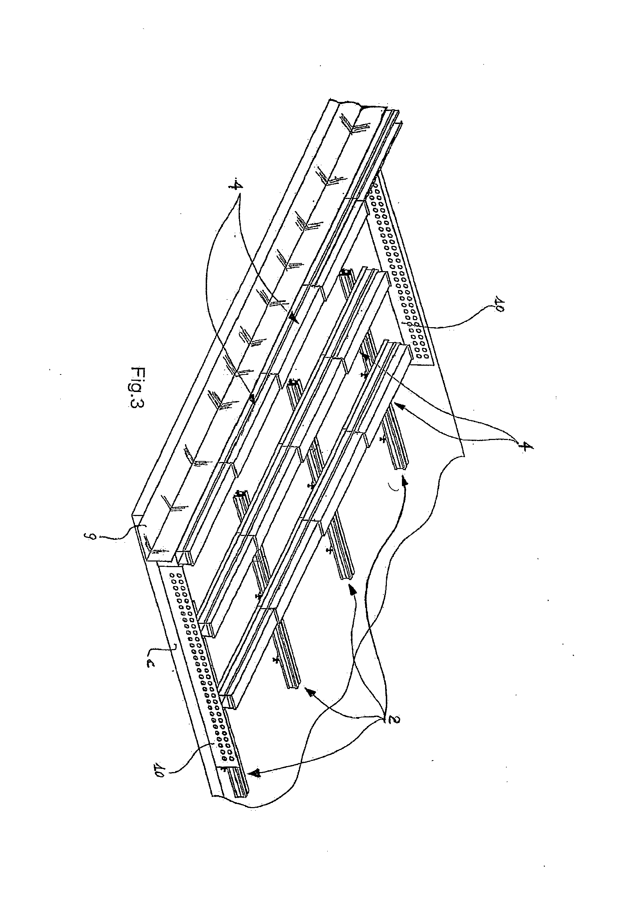

Fig. 3 is an axonometric view of a part of the grid upon whose upper profiles, support profiles for the bonding of the photovoltaic modules have been attached;
Fig. 4 is a sectional front view of the gutter when engaged at the upper profile;

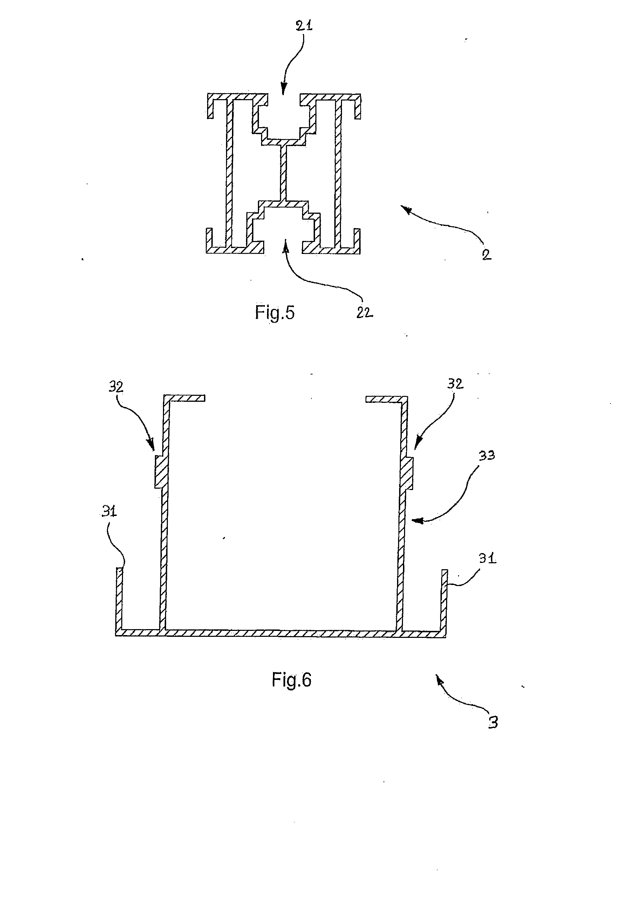

Fig. 5 is a sectional view of a purlin;
Fig. 6 is a sectional view of an upper profile;
Fig. 7 is a longitudinal sectional view of the photovoltaic module support profiles;
fig. 8 is a plan view of a support profile upon which two parallel strips of double-sided tape and
two strips of adhesive have been applied;
Fig. 9 is a side view of the junction point of two lateral profiles;
Fig. 10 is a side view of the junction point between the two lateral profiles and the installed photovoltaic modules;

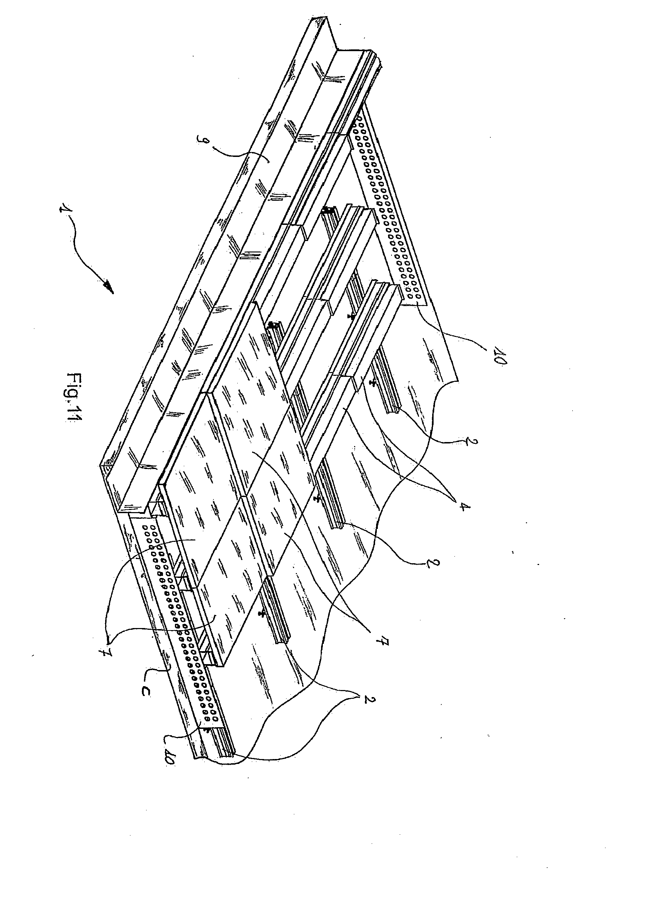

Fig. 11 is a view of the photovoltaic system with some modules fitted;
Fig. 12 is a side view of a bracket for fixing the purlins to a roof and to the support profiled member equipped with the support profile, in the case of a flat-type roof covering;
Fig. 13 is a side view of a bracket for fixing the purlins to a roof and to the support profiled member equipped with the support profile, in the case of a barrel-shape roof covering.

The photovoltaic module support structure will be referred hereinafter to as a "photovoltaic system".

According to an example of the invention, with particular reference to the appended drawings, a system for the installation of photovoltaic modules above, or in place of, the roof of a building, is described herein.

The photovoltaic system, generally indicated by the reference number 1, comprises a series of purlins 2 arranged parallel to each other, acting as supports for other upper profiles 3.

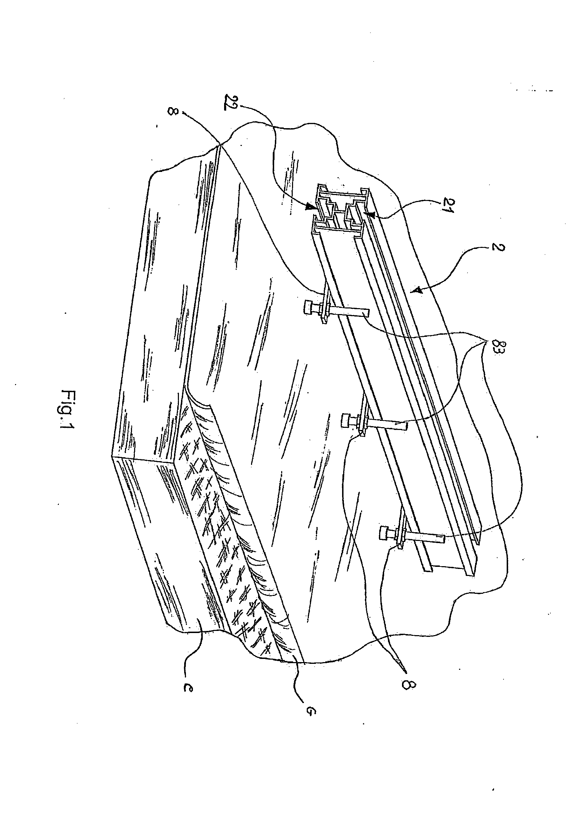

The purlins 2, as illustrated in figures 1, 12 and 13, are made from aluminum profiles, comprising an upper cavity 21 and a lower cavity 22 acting as a seat for a nut 82 to secure a bracket 8 by means of an anchor bolt 81. The bracket 8 also being engaged by a thread 83 which is anchored either to the roof or the roof covering C. The thread 83 having a pair of nuts 84 and 85 which allow for the adjustment of the distance from the roof purlins 2 or roof covering C in order to compensate for possible height differences with roofs that are not flat. At the base of the thread 83 there is a sealing gasket 86 which prevents the formation of condensation and which further protects against damage to the roof on it.

Advantageously, in order to ensure their durability, brackets 8 are made of stainless steel and the threads 83 of galvanized metal.

In the case of perfectly flat roofs the aluminium purlin 2 can be replaced by a wooden one which will then be positioned in a vertical manner.

A series of upper profiles 3 is engaged on the top and perpendicular to the upper surfaces of the purlins 2 by means of bolts 87 and nuts 88 so as to form a grid which functions as a support element for the photovoltaic modules 7. The use of glass-on-glass type modules makes the roof covering walkable and durable over time.

In order to create a greater supporting surface for the photovoltaic modules and to ensure impermeability between the two modules, above the upper profiles 3 supporting profiles 4 are attached which act as a fillers and surface for the application of adhesives for anchoring the modules, said profiles resting on protrusions 32 formed on the lateral surfaces of the upper profile 3.

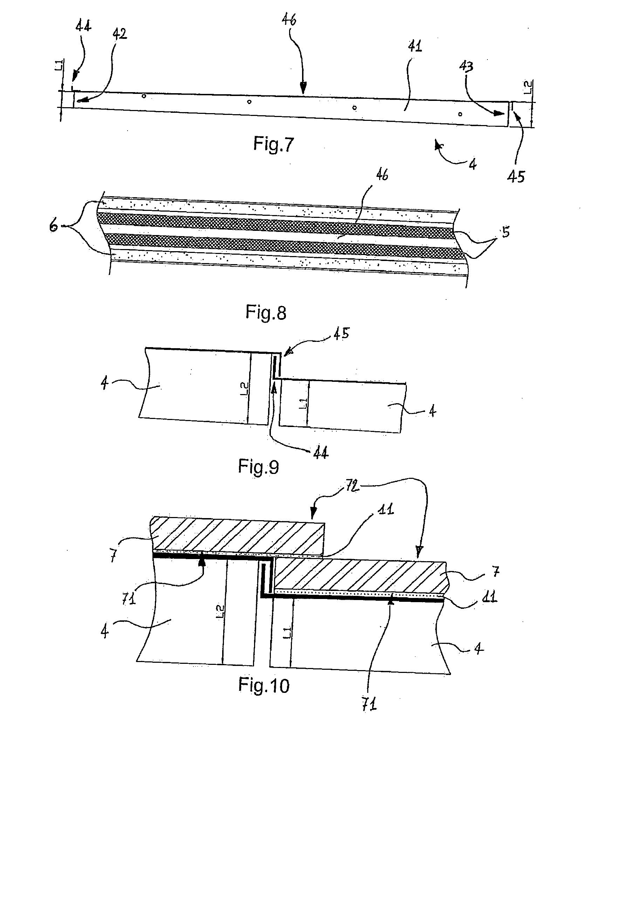

As shown in Figure 7, in order to obtain a tile-effect between one photovoltaic module 7 and another, the lateral section of the supporting profiles 4 is not rectangular but inclined, the height 12 of edge 43 being greater than the height 11 of edge 42.

For the fixing of the photovoltaic modules 7 to the supporting profiles 4, two types of adhesion are provided, the first obtained by applying a double-sided adhesive tape 5 acting as a supplementary seal and also allowing a first immediate attachment of the photovoltaic module 7 maintaining a constant level of adhesion and ensuring a constant distance between the support and the module in order to facilitate installation, and a special water-proof, high-tensile strength glass adhesive 6. Said adhesive 6 being suitable to compensate for expansion due to the temperature variation between the different materials used and to ensure a firm anchoring of the photovoltaic modules to the system structure.

With reference to fig. 10, to prevent water infiltration especially in roofs with tilts lower than 20 degrees, a strip of adhesive 11 is applied along the junction line of the photovoltaic modules 7.

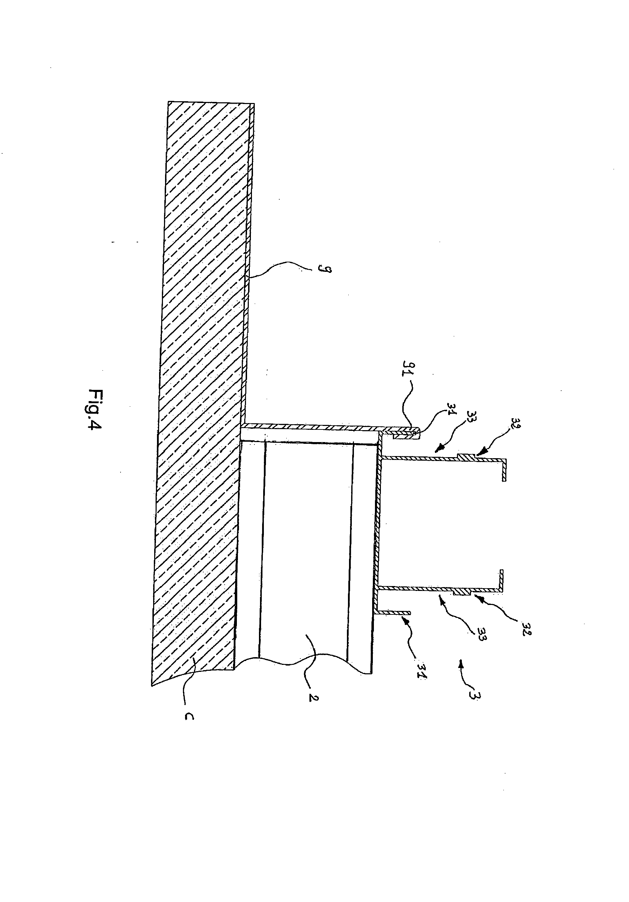

As shown in Figure 4, the photovoltaic system 1 includes the application of a gutter 9 which acts as a junction element between the roof made up of photovoltaic modules and the parapet. The L-shaped section gutter 9 has a fold 91 on the upper side which acts as a hook for the same gutter 9 to the end 31 of the upper profile 3.

At the roof ridge the system 1 provides a wide channel whose purpose is to allow for the escape, by means of the chimney effect, of the hot air coming from the cavity formed between the protective sheath G and the area below the photovoltaic modules 7. This chimney effect also prevents the formation of condensation.

The system 1 also includes the use of bird protection grills 10 near the ends of the roof.

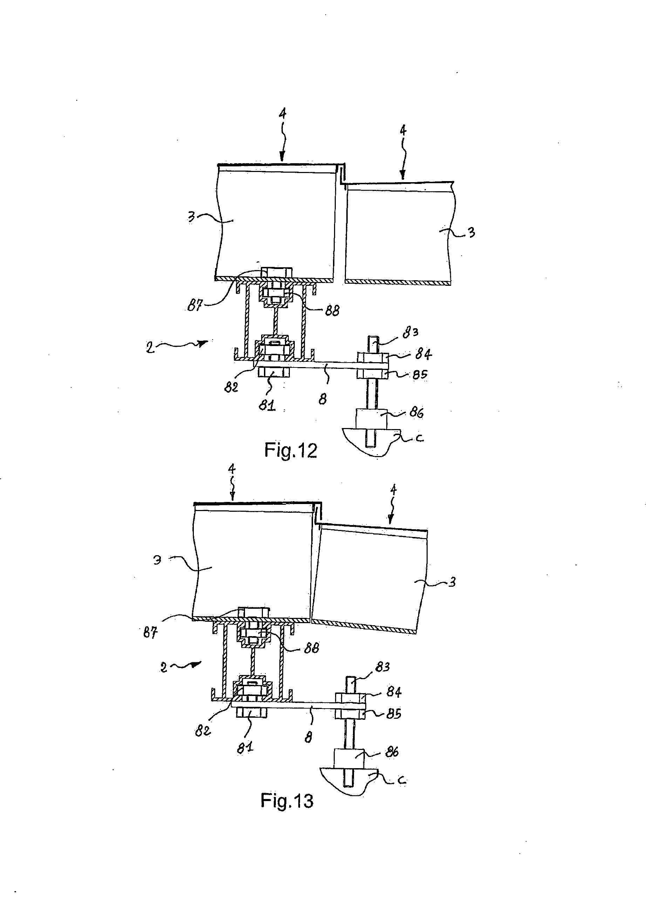

As shown in Figure 13, the photovoltaic system 1 can also be advantageously installed on so-called barrel-shaped roof coverings. In fact, the misalignment of the upper profiles 3 is compensated for by the flexibility of the appendages 44 and 45 thus allowing for a curve that adapts itself to that of the roof covering.

## Claims

1. A photovoltaic system (1) and an installation method thereof comprising:
- at least two purlins (2) anchored parallel to the covering C of the roof of a building;
- a means of anchoring (8) said at least two purlins (2), to said covering C, said anchoring means (8) comprising a system (83, 84, 85) for the compensation of any difference in height of the covering C;
- at least two upper profiled members (3) engaged, by suitable means, to said purlins (2);
- at least two supporting profiles (4) engaged to at least two upper profiles (3);
said photovoltaic system (1) being **characterized in that** the upper profiles (3) are closed on the top by means of a supporting profile (4), having the function of hooking the photovoltaic modules (7), and having a C-shaped cross section, whose side walls (41) are of increasing height from left to right, so that the lateral edges (42, 43) result in different heights, in order to create a difference in height in the longitudinal direction, between any photovoltaic module (7) installed.

2. A photovoltaic system (1) according to claim 1, **characterized in that** the upper face of said supporting profile (4) has at its edge (42) an attachment (44) facing upwards, and at the opposite edge (43) an attachment (45) facing downwards.

3. A photovoltaic system (1) according to claims 1 and 2 **characterized in that** the supporting profile (4) rests on a pair of protrusions (32) formed at around ¾ of the height of the lateral faces (33) of the upper profile (3)

4. A photovoltaic system (1) according to the preceding claims, **characterized in that**, in order to provide for a perfect alignment of the photovoltaic modules (7), the supporting profiles (4) can, during the installation phase, move around on the upper profiles (3).

5. A photovoltaic system (1) according to the preceding claims, **characterized in that**, the photovoltaic modules (7), according to the type, when installed, are anchored at the side or at the center of the profiled support members (4), and at the bottom of the upper edge of the next photovoltaic module (7).

6. A photovoltaic system (1) according to the preceding claims, **characterized in that** each photovoltaic module (7) is anchored at the lateral edges to the profiled support members (4) by at least one strip of double-sided tape (5) and at least one strip of adhesive (6), the latter having the function of both stabilizing the junction and the distance of said photovoltaic modules (7) at said profiled support member (4) and compensating, by means of its plasticity, for the thermal expansion acting on the photovoltaic system (1).

7. A photovoltaic system (1) according to the preceding claims, **characterized in that**, the bottom edge (71) of the unexposed face of each photovoltaic module (7) rests on the upper edge (72) of the exposed face of the adjacent module, for this purpose, the height difference between the long edge (43) and the short edge (42) (L2-L1) of the profiled support member (4) corresponds to the sum of the thickness of a photovoltaic module (7) and the thickness of a layer of adhesive (6).

8. A photovoltaic system (1) according to claim 1, **characterized in that** the purlins (2) are anchored to the covering C by means of at least two brackets (8) engaged on one side, to the lower cavity (22) of said purlins (2) by means of a nut and anchor bolt system (82, 81), and on the other side, to said covering C, by means of a thread (83) and nuts (84, 85), the nut (82) being free to slide within the cavity (22), when the anchor bolt (81) is untightened, in order to allow for optimization of the photovoltaic system's (1) anchorage to the covering C.

9. A photovoltaic system (1) according to claim 1 **characterized in that** the upper profile (3) is provided with a C-shaped base for the attachment of a gutter (9).

10. A method for the installation of a photovoltaic system (1), **characterized by** the following steps:
- the application of a protective sheath G, in roofing felt or of a plastic film, or asbestos cement sheets, onto the covering C;
- the anchoring of the purlins (2) to the covering C by means of brackets (8), carefully identifying, before tightening the nut and anchor bolt system (81, 82), the most suitable area for the insertion of the thread (83), such a system (8, 81, 82, 83, 84, 85), being adaptable, both vertically, and horizontally, to all types of roofs C of different spans;
- the fastening of the upper profiles (3) to the purlins (2) by means of a thread or bolt;
- the application of the lateral gutters (9);
- the attachment of the supporting profiles (4) above the upper profiles (3);
- the fastening of said supporting profiles (4) to the upper profiles (3) by means of rivets or other similar means;
- the implementation of at least one drainage channel for stagnant water in the part of the roof covering corresponding to the roof ridge;
- the application of bird protection grilles (10);
- the application of at least one strip of double-sided tape (5) onto the upper face of the profiled support members (4) and on each upper exposed edge (72) of the photovoltaic modules (7), said double-sided tape (5) having the function of facilitating the exact installation of said modules (7), which otherwise would tend to slide downwards until such time as the adhesive (6) solidifies;
- the application of a layer of high-tensile strength glass adhesive (6), parallel to the double-sided tape (5);
- the placement of glass-on-glass type photovoltaic modules;
- the application of a bonding adhesive strip (11) among each module (7) in order to prevent water infiltration.
